# EUROPEAN PATENT APPLICATION

(11) **EP 0 671 850 A2**
(43) Date of publication of application: **13.09.1995**
(21) Application number: 95301408.1
(22) Date of filing: 03.03.1995
(51) Int. Cl.: H04N 5/262

(54) **Method and apparatus for smoothing out stepwise changes of field of view**

(30) Priority: 10.03.1994 IL 10892294
(71) Applicant: STATE OF ISRAEL - MINISTRY OF DEFENCE, Haifa 31021 (IL)
(72) Inventor: Netzer, Yishay, IL-20124 (IL)
(74) Representative: West, Alan Harry

(57) **Abstract**

A method of smoothing out stepwise changes of field of view between a first and a second field, in an observation system adapted to operate between at least two fields of view, which observation system has picture acquisition means adapted to each field of view and display means for displaying the picture, comprises the steps of: a) selecting a reference point in the picture to be observed in a first field of view; b) digitizing the part of the picture appearing in the first field of view which it is desired to see after the step change, and transmitting the digitized data to data processing means; c) processing the said digitized data to compress or expand each pixel by a factor equal to or less than about the difference between the fields of view, the said compression or expansion being carried out sequentially in a plurality of steps; d) at each stage of the compression or expansion process, displaying the partially compressed or partially expanded picture, so as to create the feeling of a smooth transition between the first and the second fields of view; and e) after the last stage of the compression or expansion process has been completed, substituting the picture generated thereby with the picture as seen by the picture acquisition means of the second field of view.

## Description

The present invention relates to a method and apparatus for smoothing out stepwise changes of field of view. More particularly, the invention relates to electronically generated pictures generated by electro-optical picture acquisition means.

Observation systems are well known in the art, particularly for military and surveillance uses. They normally comprise optical devices, such as a camera, mounted on a platform, which can be manned or unmanned. The camera scans the area of interest, either automatically or as directed by the operator, and the images collected by it are relayed to a screen, where they are viewed by the operator. One such observation system is described in an article by David J. Busse & Kevin G. King [Forward Observation Remote Target Acquisition System (FORTAS), "*Unmanned Systems*", Fall 1992, pp. 14-17], which describes one type of construction and related uses.

Normally, the operator scans the area of interest and wishes to view it with a wide field of view. However, when an object of interest appears on the screen, he wishes to zoom in to view it and its surroundings at an enlarged size. After his inspection of the object is completed, he wishes to zoom out, to return to a wider field of view. Zooming can, of course, be effected as in movie cameras, by providing continuous zoom systems comprising a plurality of lenses and fine mechanics. However, such systems are expensive, their resolution is a compromise between conflicting parameters, and they are sensitive to field conditions, where most of the observation systems are used, thus reducing their reliability. Furthermore, the operator of such systems is normally interested in panoramic views (wide field) and in enlarged pictures of specific objects (narrow field), but his interest in intermediate fields of view is very limited. For these reasons, normal observation systems are made so that the picture acquisition devices (cameras) switch between fields of view stepwise. This requires a more limited number of lenses and simpler and more reliable mechanics, and the optical performance can be separately optimized for each set, and is therefore preferred.

Unfortunately, there is a drawback to this solution, which derives from the slow adjustment of the human senses to field changes. When the picture is switched on the screen from one field of view to another, the change is too sudden and the operator is disoriented until he becomes used to the new picture. This does not only comport a discomfort for the operator, but also leads to a situation where there is no continuity in the observation of the operator, which substantially diminishes the effectiveness of his work. This is particularly severe when zooming in from a wider field of view, since then it is desired to follow a specific object closely and the sudden change in the dimensions of the object and of its surroundings render this task difficult.

It is therefore clear that it would be highly desirable to be able to overcome the abovementioned drawbacks of prior art systems, without the need for expensive and complicated optical and mechanical systems.

It is an object of the present invention to provide a method and apparatus which at least alleviate the aforementioned problem, and which render the transition of the picture among fields of view smooth and comfortable for the operator.

It is another object of the invention to provide an apparatus which is relatively inexpensive and simple to operate. Other objects of the invention will become apparent as the description proceeds.

The method of smoothing out stepwise changes of field of view between a first and a second field, according to the invention, in an observation system adapted to operate between at least two fields of view, the said observation system having picture acquisition means adapted to each field of view and display means for displaying the picture, comprises the steps of:
a. selecting a reference point in the picture to be observed in a first field of view;
b. digitizing the part of the picture appearing in the first field of view which it is desired to see after the step change, and transmitting the digitized data to data processing means;
c. processing the said digitized data to compress or expand each pixel by a factor equal to or less then about the difference between the fields of view, the said compression or expansion being carried out sequentially in a plurality of steps;
d. at each stage of the compression or expansion process, displaying the partially compressed or partially expanded picture, so as to create the feeling of a smooth transition between the first and the second fields of view; and
e. after the last stage of the compression or expansion process has been completed, substituting the picture generated thereby with the picture as seen by the picture acquisition means of the second field of view.

The reference point referred to above is preferably the center of the picture, since usually the optical axes of the two fields of view are coalligned. The timing of the picture substitution can be dictated by a number of considerations, and it can be a fixed value or can be selected at will by the operator. For instance, if the size ratio between the first and the last real time pictures is m, after the picture has been electronically scaled (up or down) by a factor of √m the final real time picture, as seen by the picture acquisition means, can be substituted. This may be done, for instance, when scaling down from a unit value size, when the size has reached the value √m, and when scaling up from a size of √m, when the size has reached a value of m.

Accordingly, two separate modes of operation can be used in normal operation: 1) a "smooth" method, whereby the picture is scaled by equal small increments, and the final real time picture is substituted when its size is substantially equal to - or 1-2 increments away from - the last electronically-generated picture; and 2) a "jump" method, whereby the picture is scaled by small increments until its size is removed from that of the final, real time picture, by a factor which is substantially greater than the said small increments, and then the picture is substituted.

According to a preferred embodiment of the invention, the stepwise change is effected by switching from a first to a second lens or set of lenses, one of the said lenses or set of lenses providing a picture enlarged by a given factor, as compared to the other lens or set of lenses. Of course, more than two positions may exists in each picture acquisition system, and all that is said with reference to two positions applies, *mutatis mutandis*, to any additional or intermediate position. Furthermore, the method of the invention is not limited to any specific method of switching between different fields of view, and can be used with any suitable method. For instance, the method can be applied also when switching between different cameras having fixed fields of view, which are directed to the same center of picture, to smooth out the transition between such different cameras. For the sake of simplicity, however, in the following description reference will be made mostly to conventional systems having multifocal-length cameras.

As stated, the method of the invention can be used both when zooming in and when zooming out. When the stepwise change includes zooming in from a wider field of view to a narrower field of view, the picture expansion process comprises the steps of:
A. selecting a reference point positioned within the picture to be enlarged, typically the center of the picture;
B. selecting a frame within the picture, which encompasses the area of the picture corresponding to the enlargement factor between the first and the second field;
C. selecting an enlargement factor for each step;
D. generating from each pixel or each group of pixels one or more synthetic pixel(s) so that the ratio of the combined area of the original pixel and of the pixel(s) so generated, to the area of the original pixel, equals the enlargement factor;
E. displaying the enlarged frame;
F. repeating steps A through E until the dimensions of the selected frame are the same or slightly below those of the limits of the display means; and
G. substituting the picture generated by the enlargement process with the picture as seen by the picture acquisition means of the enlarged field of view.

The synthetic pixels can be generated from existing pixels by a number of methods known in the art by extrapolation and interpolation, and therefore this step, which is clear to the skilled person, is not discussed here in detail, for the sake of brevity. For instance, picture processing can be effected using standard elements such as the TMC2301 - CMOS Image Resampling Sequencer and the TMC2246 - CMOS Image Filter, (manufactured by TRW Inc., U.S.A).

Of course, the enlargement factor will determine the number of steps required, which in turn will determine the smoothness of change of the picture on the screen. This factor can be determined in a variety of ways, and will substantially be selected on the basis of human engineering considerations, so as to render the use of the system comfortable for the operator.

The substitution of the real enlarged picture viewed by the camera can be effected either when the computer-generated enlarged picture has reached the size of the true large picture, or slightly before, so as to render the transition as natural as possible. It should be understood, however, that even if the substitution is effected earlier in the process, the result is still an improved one, because the eye of the operator will be obliged to effect the transition between a picture which is closer in dimensions and boarders to the enlarged one than was the original picture.

When the stepwise change includes zooming out from a narrower field of view to a wider field of view, the picture compression process comprises the steps of:
I. selecting a reference point in the picture to be compressed;
II. selecting as the selected frame the boarders of the display means;
III. selecting a compression factor for each step;
IV. compressing each pixel by the compression factor;
V. displaying the compressed picture, leaving pixels located between the compressed frame and the frame of the display means blank;
VI. repeating steps I through V until the frame of the picture has been compressed by the compression factor or slightly less; and
VII. substituting the picture generated by the compression process with the picture as seen by the picture acquisition means of the reduced field of view.

Whether the final transition is made by the smooth, jump or mixed method can be chosen at will also in this case, as discussed above.

The difference between the enlargement and the compression processes resides mainly in the fact that while compressing the quality of the picture can be maintained, since no approximate data is to be generated for the new pixels, and in that the frame of the picture shrinks, leaving empty (or black) boarders which will be filled only when the real picture is substituted.

As discussed above, the compression of the picture can be effected by any suitable method and therefore is not discussed in detail, for the sake of brevity.

The invention also encompasses apparatus for smoothing out stepwise changes of field of view between a first and a second field, in a multi-field of view observation system having picture acquisition means adapted to each field of view and display means for displaying the picture, comprising:
1 - digitizing means to digitize the part of the picture appearing in the first field of view which it is desired to see after the step change;
2 - data transmission means, to transmit digitized data to data processing means and therefrom to the display means;
3 - data processing means, to process the said digitized data, to compress or expand each pixel by a predetermined, the said compression or expansion being carried out sequentially in a plurality of steps; and
4 - control means to substitute the picture generated by the data processing means with the picture as seen by the picture acquisition means.

As will be appreciated by the skilled person, the quality of the picture obtained during zooming in decreases with each step, since the number of details per unit area decreases. However, this fact does not detract from the advantages of the invention, since the period of time during which quality is reduced is very brief (of the order of 1- 2 seconds), and since the desired effect of providing a feeling of smooth transition is achieved even with a somewhat reduced quality of the picture.

The above and other characteristics and advantages of the invention will be further illustrated through the following illustrative and non-limitative examples of embodiments of the invention.
Fig. 1 illustrates the passage between two fields of view, according to the devices of the known art, when zooming in;
Fig. 2 illustrates the same operation as in Fig. 1, but when operating according to one embodiment of the invention;
Fig. 3 illustrates the passage between two fields of view, according to the devices of the known art, when zooming out;
Fig. 4 illustrates the same operation as in Fig. 3, but when operating according to one embodiment of the invention;

The following examples illustrate the invention, but are not intended to be limitative.

### Example 1

### Zooming In

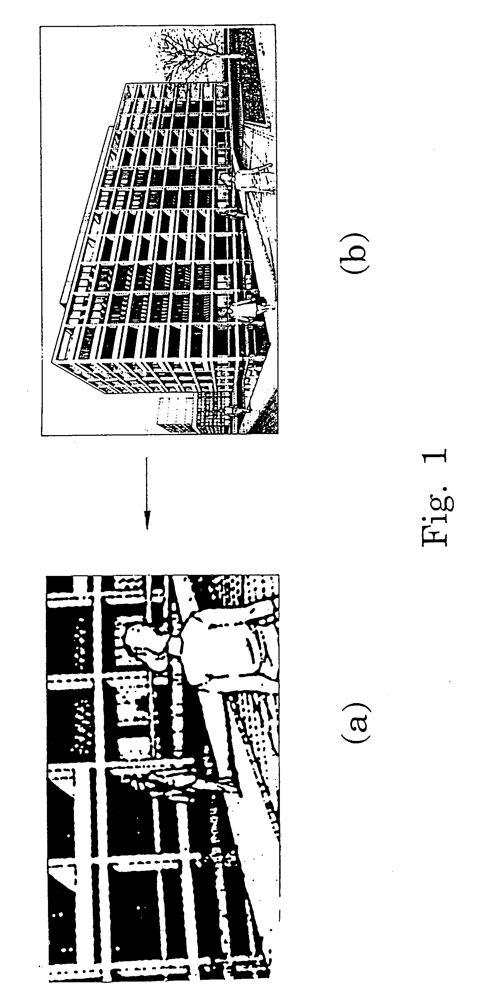

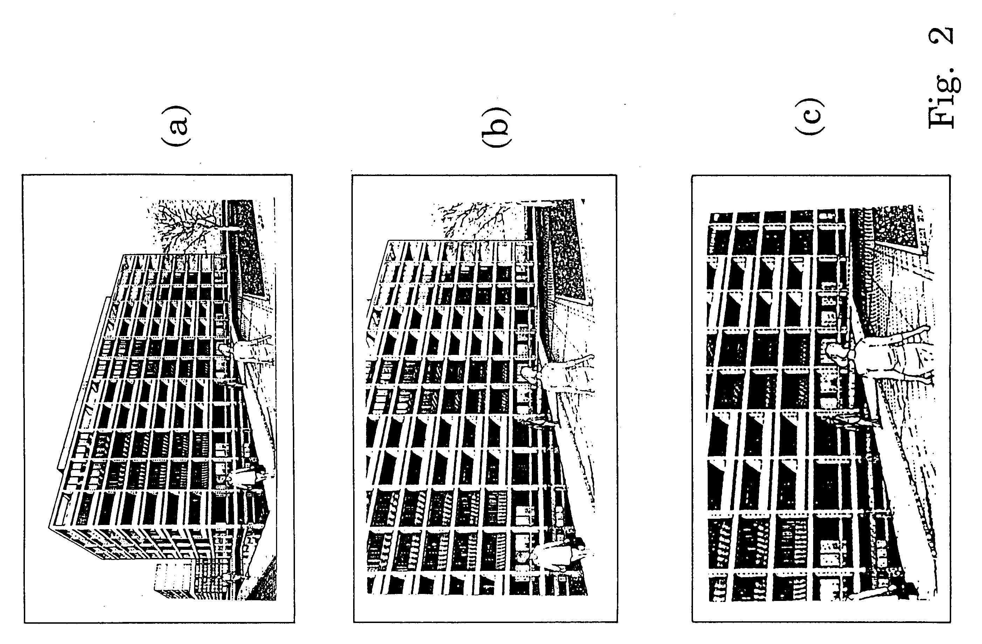

Fig. 1 shows a building being surveilled (Fig. 1(a)). The operator wishes, at one time, to zoom in at the center of the bottom of the picture, to obtain a close view of the man walking away from the building. Before he does so, the operator will normally position the point of interest at or near the center of the picture. In a device operating according to the prior art, the transition will be as illustrated in Fig. 1, with a sharp change from Fig. 1(a) to Fig. 1(b).

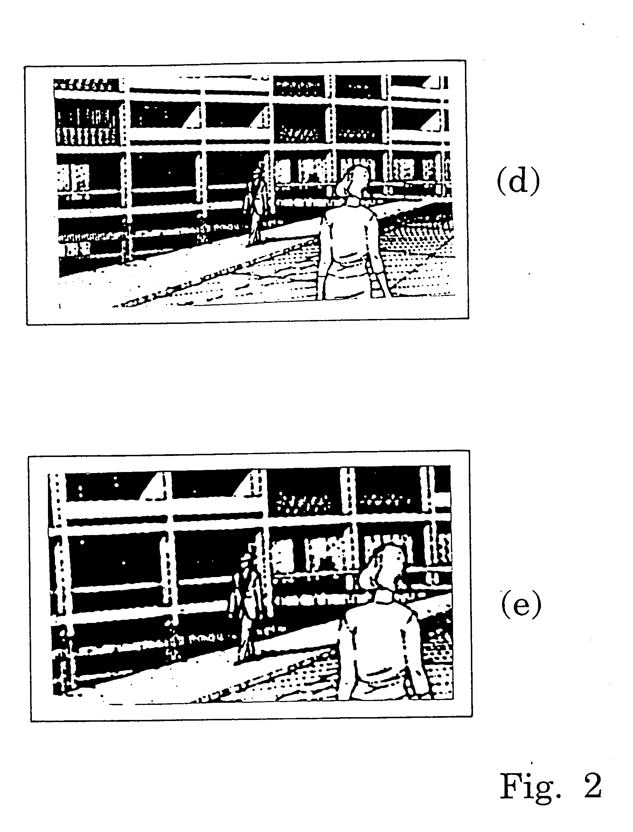

When operating according to one embodiment of the invention, on the other hand, the change is obtained gradually. This is illustrated by Fig. 2. Fig. 2(a) is the same picture seen on the screen, as obtained in real time by the picture acquisition system, and corresponds to Fig. 1(a). Fig. 2(a) is digitized and enlarged sequentially, to produce Figs. 2(b) through 2(e), during which time the operator does not see a real time picture, but the enlargement of the picture of Fig. 2(a). When the enlargement (Fig. 2(e)) approaches that of the real time picture of the second field of view, the apparatus switches again to the real time picture of Fig. 1(a).

Of course, Fig. 2 is presented in simplified form, the number of enlargements being limited and the enlargement factor being large (141%). However, when operating an actual device, the number of frames and the frequency of change will be adapted to obtain a change which is optimal both from the point of view of smoothness and of time, since it is not desirable to keep the operator away from the real-time picture for too long an interval of time.

As can be seen by going through Fig. 2, passing through a number of consecutive enlargements provides a much easier adjustment of the eye than is obtained according to the known art. One can appreciate the improvement by closely scanning Fig. 2, sequentially from Fig. 2(a) to Fig. 2(e), and comparing the feeling with that obtained by passing, at the same speed from Fig. 1(a) to Fig. 1(b).

### Example 2

### Zooming Out

Zooming out is similar to zooming in, as far as the comfort of the operator is concerned, and the same general considerations hold true. However, there is a difference between the two, which will be explained below.

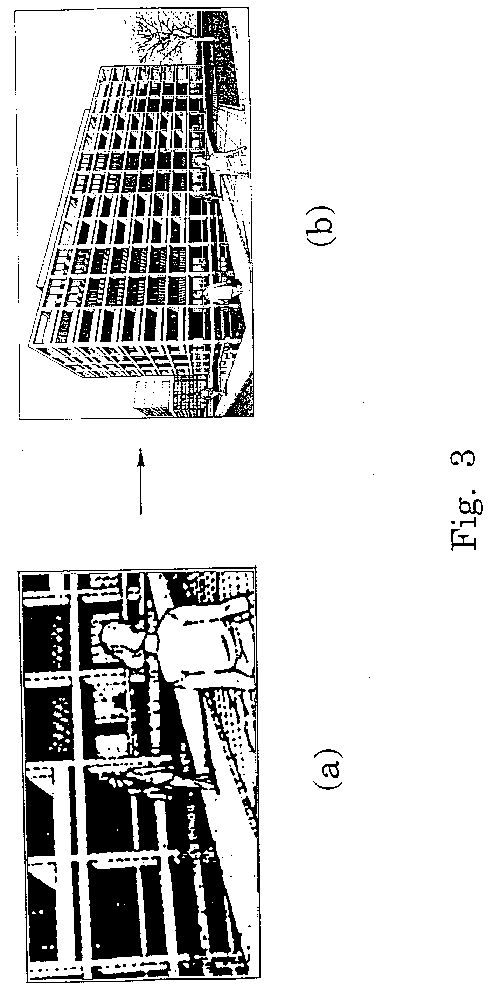

For the sake of comparison, the same picture which was used for illustrating the process of Example 1 is used also here. Zooming out involves the inverse process, viz., the passage from Fig. 3(a) to Fig. 3(b), which illustrates the operation of prior art apparatus.

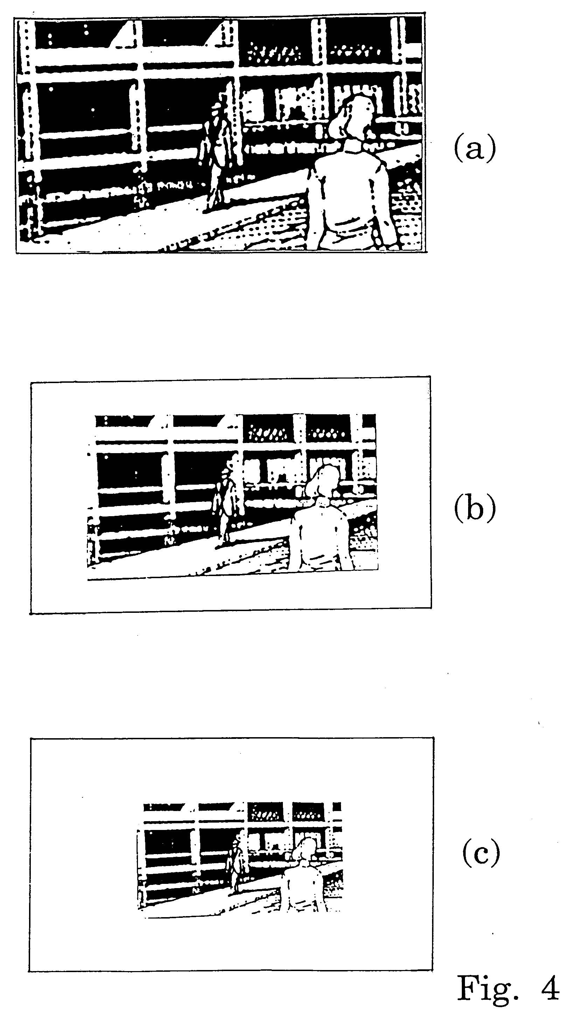

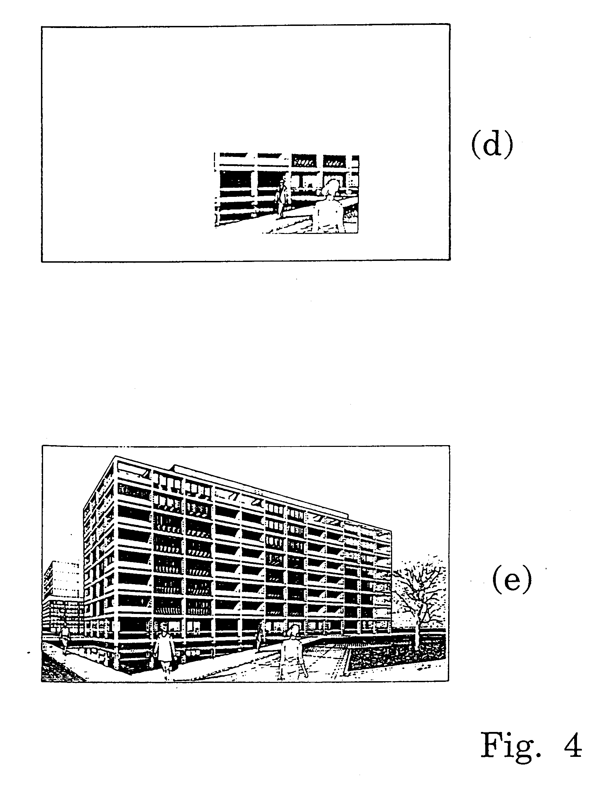

Fig. 4 illustrates the zooming out operation according to one embodiment of the invention. Fig. 4(a) is the real-time picture, which is digitized and reduced. Figs. 4(b) through 4(d) are computer-generated reductions of Fig. 4(a). Fig. 4(d) has the approximate dimensions of the real-time picture of the second (wider) field of view, and therefore the apparatus switches from it to the real-time picture of Fig. 4(e).

The difference between zooming in and zooming out is apparent from Fig. 4. When zooming out the only available picture is only fraction of the next field of view, so that its reduction leads to the generation of an empty frame around it, as seen in the figure. nevertheless, passing from the correctly sized picture of Fig. 4(d), although it is only a partial picture, to the real-time picture of Fig. 4(e) provides an easier transition than the extreme jump between the two real-time pictures of Fig. 3.

It should further be noted that it is possible at least partially to overcome the drawback of the empty frame, by extrapolating the surroundings of the shrinking picture, to fill the empty frame with a background which is in harmony with the picture, e.g,, by filling the empty areas with pixels having the same color intensity as the average intensity of their surroundings. This can be effected by known algorithms, or by any suitable method the development of which is within the scope of the skilled engineer.

All the above description and examples have been given for the purpose of illustration and are not intended to limit the invention in any way. Many changes can be effected in the invention. For instance, different algorithms can be employed for expanding or compressing the pixels, and different means to display, process or transmit the data can be used. Furthermore, different observation systems, having different and/or additional elements, can be exploited, all without exceeding the scope of the invention.

## Claims

1. A method of smoothing out stepwise changes of field of view between a first and a second field, in an observation system adapted to operate between at least two fields of view, the said observation system having picture acquisition means adapted to each field of view and display means for displaying the picture, comprising the steps of:
a. selecting a reference point in the picture to be observed in a first field of view;
b. digitizing the part of the picture appearing in the first field of view which it is desired to see after the step change, and transmitting the digitized data to data processing means;
c. processing the said digitized data to compress or expand each pixel by a factor equal to or less then about the difference between the fields of view, the said compression or expansion being carried out sequentially in a plurality of steps;
d. at each stage of the compression or expansion process, displaying the partially compressed or partially expanded picture, so as to create the feeling of a smooth transition between the first and the second fields of view; and
e. after the last stage of the compression or expansion process has been completed, substituting the picture generated thereby with the picture as seen by the picture acquisition means of the second field of view.

2. A method according to claim 1, wherein the stepwise change is effected by switching from a first to a second lens or set of lenses, one of the said lenses or set of lenses providing a picture enlarged by a given factor, as compared to the other lens or set of lenses.

3. A method according to claim 1 or 2, wherein the stepwise change includes zooming in from a wider field of view to a narrower field of view, the picture expansion process comprising the steps of:
A. selecting a reference point positioned within the picture to be enlarged, typically the center of the picture;
B. selecting a frame within the picture, which encompasses the area of the picture corresponding to the enlargement factor between the first and the second field;
C. selecting an enlargement factor for each step;
D. generating from each pixel or each group of pixels one or more synthetic pixel(s) so that the ratio of the combined area of the original pixel and of the pixel(s) so generated, to the area of the original pixel, equals the enlargement factor;
E. displaying the enlarged frame;
F. repeating steps A through E until the dimensions of the selected frame are the same or slightly below those of the limits of the display means; and
G. substituting the picture generated by the enlargement process with the picture as seen by the picture acquisition means of the enlarged field of view.

4. A method according to claim 1 or 2, wherein the stepwise change includes zooming out from a narrower field of view to a wider field of view, the picture compression process comprising the steps of:
I. selecting a reference point in the picture to be compressed;
II. selecting as the selected frame the boarders of the display means;
III. selecting a compression factor for each step;
IV. compressing each pixel by the compression factor;
V. displaying the compressed picture, leaving pixels located between the compressed frame and the frame of the display means blank;
VI. repeating steps I through V until the frame of the picture has been compressed by the compression factor or slightly less; and
VII. substituting the picture generated by the compression process with the picture as seen by the picture acquisition means of the reduced field of view.

5. Apparatus for smoothing out stepwise changes of field of view between a first and a second field, in a multi-field of view observation system having picture acquisition means adapted to each field of view and display means for displaying the picture, comprising:
1 - digitizing means to digitize the part of the picture appearing in the first field of view which it is desired to see after the step change;
2 - data transmission means, to transmit digitized data to data processing means and therefrom to the display means;
3 - data processing means, to process the said digitized data, to compress or expand each pixel by a predetermined, the said compression or expansion being carried out sequentially in a plurality of steps; and
4 - control means to substitute the picture generated by the data processing means with the picture as seen by the picture acquisition means.

6. A method of changing a field of view in an observation system comprising the steps of:
selecting an image in a first field of view;
processing a representation of the image so as to compress or to expand the image in a sequence of steps;
at each step of the processing displaying the partially compressed or partially expanded image; and
displaying the compressed or expanded image in a second field of view.

7. An apparatus for changing a field of view in an observation system comprising:
means for selecting an image in a first field of view;
means for processing a representation of the image so as to compress or to expand the image in a sequence of steps;
means for displaying the partially compressed or partially expanded image at the end of each step; and
means for displaying the compressed or expanded image in a second field of view.
